# EUROPEAN PATENT APPLICATION

(11) **EP 4 521 789 A1**
(43) Date of publication of application: **12.03.2025**
(21) Application number: 24197543.2
(22) Date of filing: 30.08.2024
(51) Int. Cl.: H04W 4/90, H04W 4/80, H04W 4/021, H04W 4/02

(54) **SYSTEM AND METHOD FOR JOBSITE COMMUNICATIONS MANAGEMENT**

(30) Priority: 07.09.2023 US 202363536999 P
(71) Applicant: Black & Decker, Inc., New Britain, CT 06053 (US)
(72) Inventor: FARREN, Vance J., Rosedale, 21237 (US); CHRISTNER, Daniel S., Baltimore, 21229 (US); LEH, Jason K., Shrewsbury, 17361 (US); FARRELL, Brice D., Damascus, 20872 (US); CUNANAN, Regina Gracia C., Baltimore, 21237 (US)
(74) Representative: SBD IPAdmin

(57) **Abstract**

A method for job site communications management is provided, including: receiving, via a first wireless headset including a low-energy communication transceiver, at least one advertising signal; determining if the at least one advertising signal denotes at least one approved worksite powered device that is a power tool, a power tool battery pack, a battery charger, or a work light; initiating, via the first wireless headset, communication with the approved worksite powered device if the advertising signal denotes an approved device; receiving, via the first wireless headset, audio data from the approved worksite powered device; and outputting, via the first wireless headset, audio data received from the approved worksite powered device.

## Description

This application claims the benefit of U.S. Provisional Patent Application No. 63/536,999, filed September 7, 2023, which is incorporated herein by reference in its entirety.

### FIELD

The present disclosure is generally related to a method and system for jobsite communications.

### BACKGROUND

In the context of jobsite communication, wireless headsets serve as vital tools. However, certain shortcomings in current technology impede their full potential. One of the key challenges is inconsistent connectivity, especially in remote locations or structurally complex sites. Frequent drop-outs disrupt real-time communication, impacting the smooth flow of information, which is critical in ensuring coordination and safety.

Another major concern is the inadequate battery life of many wireless headsets. The nature of construction work often demands extended hours, and headsets with limited battery life fail to support seamless communication throughout an entire shift. This results in periods of silence, which could be important in avoiding accidents or ensuring efficient work progress.

Further, user comfort and ease of operation are often overlooked in headset designs. For a device that's worn for extended periods, comfort can be important. Workers should not feel any discomfort or pain even after prolonged use. Moreover, the operating controls should be simple and intuitive, considering that construction workers often operate these devices with gloved or dirty hands.

Compatibility issues with different devices and systems add another layer of complexity. A wireless headset must support integration with a variety of communication tools and systems, ensuring uninterrupted information flow. Unfortunately, many headsets face interoperability challenges, resulting in inefficient and fragmented communication.

Addressing these challenges can enhance the efficiency of wireless headsets, thereby promoting better communication and coordination at construction sites.

### SUMMARY

It is an aspect of this disclosure to provide a system for jobsite communications management. The system may include one or more powered devices and one or more second wireless headsets. The system may further include a first wireless headset comprising a low-energy communication transceiver, a speaker, and a microphone. The first wireless headset may be configured to selectively communicate via the low-energy communication transceiver with at least one second wireless headset and/or at least one powered device if the at least one second wireless headset and/or the at least one powered device generates an approved advertising signal. The system may further include the at least one second wireless headset and/or the at least one powered device being located in proximity to the first wireless headset at a jobsite within a range of the low-energy communication transceiver. By selectively communicating, the system may receive via the speaker, and/or transmit via the microphone, voice communication between users of the first wireless headset and the one or more secondary wireless headsets. The selective communicating may additionally apply to receiving data from the one or more powered devices via the low-energy communication transceiver; outputting, via the speaker, an audio representation of the data received from the one or more powered devices; outputting, via the speaker and based on a signal from the low-energy communication transceiver, an indication of a position of the one or more powered devices and/or the one or more second wireless headsets relative to the first wireless headset; and/or outputting an emergency signal from the first wireless headset to the one or more second wireless headsets; among other operations.

Another aspect provides a method for job site communications management. The method may include receiving, via a first wireless headset, at least one advertising signal; initiating, via the first wireless headset, communication with the at least one approved powered device if the at least one advertising signal denotes an approved device; and outputting, via the first wireless headset, audio data received from the at least one approved powered device.

In an embodiment, a system for jobsite communications management is provided, comprising: a powered device and first and second wireless headsets, wherein the first wireless headset comprises: a low-energy communication transceiver, a speaker, and a microphone; the first wireless headset is configured to selectively communicate via the low-energy communication transceiver with the at least one second wireless headset and/or the at least one powered device if the at least one second wireless headset and/or the at least one powered device generates an approved advertising signal, the at least one second wireless headset and/or the at least one powered device being located first at a jobsite within a range of the low-energy communication transceiver. In an embodiment, the selectively communicating comprising: receiving, via the speaker and/or transmitting via the microphone, voice communication between the first wireless headset and the at least one second wireless headset; receiving, via the low-energy communication transceiver, data from the at least one powered device; outputting, via the speaker, an audio representation of the data received from the at least one powered device; outputting, via the speaker and based on a signal from the low-energy communication transceiver, an indication of a distance of the at least one powered device and/or the at least one second wireless headset relative to the first wireless headset; and outputting an emergency signal from the first wireless headset to the at least one second wireless headset in response to the detection of an emergency event by the first wireless headset.

In an embodiment, a method for job site communications management is provided, comprising: receiving, via a first wireless headset, at least one advertising signal; determining, via the first wireless headset, if the at least one advertising signal denotes at least one approved powered device; initiating, via the first wireless headset, communication with the at least one approved powered device if the at least one advertising signal denotes an approved device; receiving, via the first wireless headset, audio data from the at least one approved powered device; and outputting, via the first wireless headset, audio data received from the at least one approved powered device.

In an embodiment, the method further includes: receiving, via the first wireless headset, local audio data; and transmitting, via the first wireless headset, the local audio data to the at least one approved powered device.

In an embodiment, the method further includes: transmitting, via the first wireless headset, the at least one advertising signal to a companion device, wherein the at least one advertising signal is generated by at least one polled powered device, and wherein the at least one advertising signal includes a device identifier (ID) token; comparing, via the companion device, the device ID token to a list of approved powered device; designating, via the companion device, the at least one polled powered device as the at least one approved powered device based on the comparing; initiating, via the first wireless headset, communication if the at least one advertising signal denotes an approved device; and outputting, via the first wireless headset, audio data received from the at least one approved powered device.

In an embodiment, the method further includes: prompting, via the companion device, to designate the at least one polled powered device as the at least one approved powered device.

In an embodiment, the method further includes: prompting, via the companion device, to select a desired communication channel from a plurality of communication channels; prompting, via the companion device, to select a broadcasting mode; receiving, via the first wireless headset, local sensor data; and broadcasting, via the first wireless headset and according to the broadcasting mode, local sensor data via the desired communication channel.

In an embodiment, the local sensor data includes local audio data. In an embodiment, the desired communication channel is a private channel shared by the first wireless headset and a single second wireless headset. In an embodiment, the desired communication channel is a group channel shared by the first wireless headset and a plurality of second wireless headsets. In an embodiment, the desired communication channel is a companion device channel shared by the first wireless headset and at least one companion device.

In an embodiment, the method further includes: receiving, via the first wireless headset, remote sensor data from at least one arbitrary piece of equipment included in the at least one powered device; and transmitting, via the companion device, the remote sensor data to a system server.

In an embodiment, the method further includes: determining, via the companion device, at least one of a distance and a physical location of the first wireless device relative to the at least one polled powered device based on a signal strength of the at least one advertising signal, and generating an alert if the physical location does not correspond to a preset value.

In an embodiment, the method further includes: capturing, via the first wireless headset, local sensor data; determining, via the first wireless headset, if an emergency event has occurred based on the local sensor data; and broadcasting, via the first wireless headset, a high-priority emergency alert via at least one available communication channel based on the determining.

In an embodiment, the method further includes: capturing, via the first wireless headset, local sensor data; prompting, via the companion device, to select a desired communication channel from a plurality of communication channels; and initiating, via the first wireless headset, communication on the desired communication channel.

In an embodiment, the desired communication channel enables the first wireless headset to participate in one-to-one communication via a connected isochronous stream protocol.

In an embodiment, the desired communication channel enables the first wireless headset to receive data streams via a broadcast isochronous stream protocol.

A method for job site communications management is provided, comprising: receiving, via a first wireless headset, at least one advertising signal; determining, via the first wireless headset, if the at least one advertising signal denotes at least one approved powered device; initiating, via the first wireless headset, communication if the at least one advertising signal denotes an approved device; connecting, via the first wireless headset, to a first communication channel, wherein the first communication channel is associated with a first priority token; receiving, via the first wireless headset, a data stream on a second communication channel, wherein the second communication channel is associated with a second priority token; connecting, via the first wireless headset, to the second communication channel if the second priority token supersedes the first priority token; receiving, via the first wireless headset, audio data from the second communication channel; and outputting, via the first wireless headset, audio data received from the second communication channel.

In an embodiment, the method further comprises: automatically reconnecting the first wireless headset to the first communication channel when the data stream from the second communication channel ends.

In an embodiment, a method for job site communications management is provided, comprising: receiving, via a first wireless headset, at least one advertising signal; determining, via the first wireless headset, if the at least one advertising signal denotes at least one approved powered device; initiating, via the first wireless headset, communication if the at least one advertising signal denotes an approved device; receiving, via the first wireless headset, audio data from the at least one approved powered device; outputting, via the first wireless headset, audio data received from the at least one approved powered device; capturing, via the first wireless headset, local sensor data; determining, via the first wireless headset, if a notable event has occurred based on the local sensor data; and outputting, via the first wireless headset, a notable event alert based on the determining.

In an embodiment, a system for job site communications management is provided, comprising: a plurality of wireless headsets, wherein the plurality of wireless headsets includes a first wireless headset and at least one second wireless headset, and wherein the first wireless headset is structured to selectively communicate with the at least one second wireless headset if the at least one second wireless headset generates at least one advertising signal that denotes at least one approved powered device.

In an embodiment, the first wireless headset is configured to receive local audio data; and transmit the local audio data to the at least one approved powered device.

In an embodiment, the first wireless headset is configured to transmit the at least one advertising signal to a companion device, wherein the at least one advertising signal is generated by at least one remote user device, and wherein the at least one advertising signal includes a device identifier (ID) token; the companion device is configured to compare the device ID token to a list of approved powered device; the companion device is configured to designate the at least one remote user device as the at least one approved powered device; the first wireless headset is configured to initiate communication if the at least one advertising signal denotes an approved device; the first wireless headset is configured to receive audio data from the at least one approved powered device; and the first wireless headset is configured to output audio data received from the at least one approved powered device.

In an embodiment, the companion device is configured to prompt designation of the at least one remote user device as the at least one approved powered device.

In an embodiment, the companion device is configured to prompt selection of a desired communication channel from a plurality of communication channels; the companion device is configured to prompt selection of a broadcasting mode; the first wireless headset is configured to capture local sensor data; and the first wireless headset is configured to broadcast local sensor data via the desired communication channel.

In an embodiment, the local sensor data includes local audio data.

In an embodiment, the desired communication channel is a private channel shared by the first wireless headset and a single second wireless headset.

In an embodiment, the desired communication channel is a group channel shared by the first wireless headset and a plurality of second wireless headsets.

In an embodiment, the desired communication channel is a companion device channel shared by the first wireless headset and at least one companion device.

In an embodiment, the first wireless headset is configured to receive remote sensor data from at least one arbitrary piece of equipment included in the at least one pieces of powered device; and the companion device is configured to transmit the remote sensor data to a system server.

In an embodiment, the companion device is configured to determine a physical location of the first wireless device relative to the at least one remote user device based on a signal strength of the at least one advertising signal and generate an alert if the physical location does not correspond to a preset value.

In an embodiment, the first wireless headset is configured to capture local sensor data; the first wireless headset is configured to determine if an emergency event has occurred based on the local sensor data; and the first wireless headset is configured to broadcast a high-priority emergency alert via at least one available communication channel based on the determining.

In an embodiment, the first wireless headset is configured to capture local sensor data; the companion device is configured to prompt selection of a desired communication channel from a plurality of communication channels; and the first wireless headset is configured to initiate communication on the desired communication channel.

In an embodiment, the desired communication channel enables the first wireless headset to participate in one-to-one communication via a connected isochronous stream protocol.

In an embodiment, the desired communication channel enables the first wireless headset to receive data streams via a broadcast isochronous stream protocol.

### BRIEF DESCRIPTION OF THE DRAWINGS

The drawings described herein are for illustration purposes only and are not intended to limit the scope of this disclosure in any way.
FIG. 1A is a system diagram in accordance with embodiments of this disclosure.
FIG. 1B is a system diagram illustrating connections between components within the self-contained communications network of FIG. 1 in accordance with embodiments of this disclosure.
FIG. 1C is a schematic diagram illustrating connections between components of the wireless headset in accordance with embodiments of this disclosure.
FIG. 2A is a front view of a wireless headset in accordance with embodiments of this disclosure.
FIG. 2B is a side view of a wireless headset in accordance with embodiments of this disclosure.
FIG. 3 depicts an exemplary flow diagram executed by the wireless headset to establish a wireless communication from a powered device within the jobsite, according to an embodiment.
FIG. 4 depicts an exemplary simple process flow diagram executed by a first wireless headset to establish a LE Audio wireless connection with a second wireless headset, according to an embodiment.
FIG. 5A depicts an exemplary process flow diagram executed by a companion device to allow a user to configure a headset within the jobsite to designate a broadcast stream for broadcasting an audio message via a first wireless headset, according to an embodiment.
FIG. 5B depicts an associated exemplary process flow diagram executed by the first wireless headset to be configured by the companion device for broadcasting the audio message on the designated broadcast stream, according to an embodiment.
FIG. 5C depicts an associated exemplary process flow diagram executed by a second wireless headset to subscribe to the designated broadcast stream, according to an embodiment.
FIG. 5D illustrates an example display of an application on the companion device for selecting a broadcast channel, according to an embodiment.
FIG. 6A depicts an exemplary process flow diagram executed by a companion device to allow a user to configure a headset within the jobsite to designate a powered device to download data from, according to an embodiment.
Fig. 6B depicts an associated exemplary process flow diagram executed by the headset to be configured to subscribe to advertising signals of the selected powered device, according to an embodiment.
FIG. 7 depicts an exemplary process flow diagram executed by a headset to identify the nearest powered device and subscribe to advertising signals of that powered device, according to an embodiment.
FIG. 8 depicts an exemplary process flow diagram executed by wireless headset to identify approaching powered devices or other headset devices and provide alerts to the user accordingly, according to an embodiment.

Throughout this specification and figures like reference numbers identify like elements.

### DETAILED DESCRIPTION

It is to be understood that both the foregoing general description and the following detailed description are exemplary and explanatory only and are intended to provide an explanation of various embodiments of the present teachings.

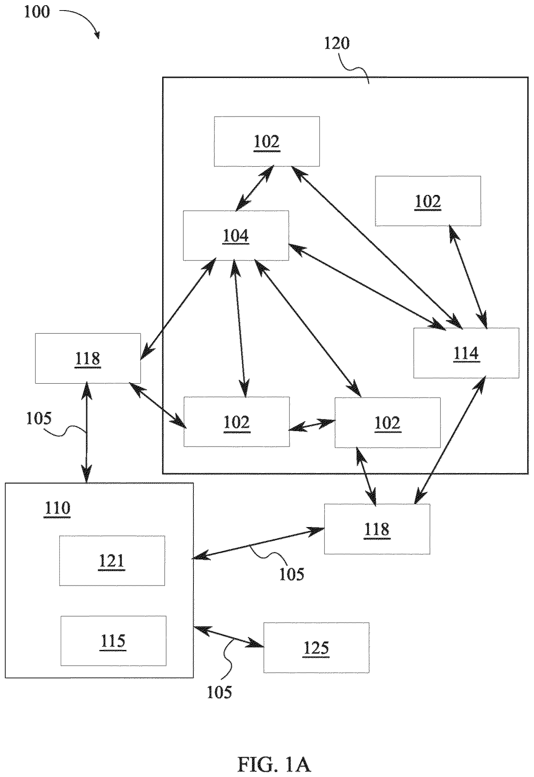

A system 100 for jobsite monitoring and communication may enable the transmission of one-to-one and one-to-many messages using a low-energy communication protocol. The system 100 may include at least one personal protective equipment (PPE) device 104, at least one powered device 102, and/or other components that can be communicably coupled to generate a self-contained communications network 120 (FIG. 1A-C). The term "low-energy" may refer to communication protocols that employ techniques that limit power consumption. Further, because reduced protocol overhead is a consequence of reducing power consumption, the low-energy communication protocol may employ overhead-reducing functionalities including link-local IPv6 addresses and stateless IPv6 address autoconfiguration, neighbor discovery, and header compression. Embodiments of the system 100 may employ at least one communication protocol selected from the following: Bluetooth Low-Energy (BLE), Internet Protocol version 6 over Low-power Wireless Area Network (6LoWPAN) protocol, the Thread networking protocol, WiFi HaLow, Zigbee. and DotDot devices. The PPE devices 104 and the components in system 100 will thus carry with them the known components that will enable these communication protocols (e.g., WiFi radios, cellular radios, BLE transceivers, and near-field communication (NFC) transceivers). The term "self-contained" may refer to a network comprising a plurality of communicably coupled communication devices (e.g., first headset 104, second headset 114, and powered device 102) that can communicate with each other without the need for external hardware. The network may include devices that are wirelessly communicating with each other to share data as described herein. In some embodiments, the system 100 may use a low-power, wide-area network (LPWAN). The LPWAN may create a wireless sensor network that connects to a plurality of pieces of powered device 102 in parallel to the self-contained communications network 120 and facilitates jobsite monitoring and management operations.

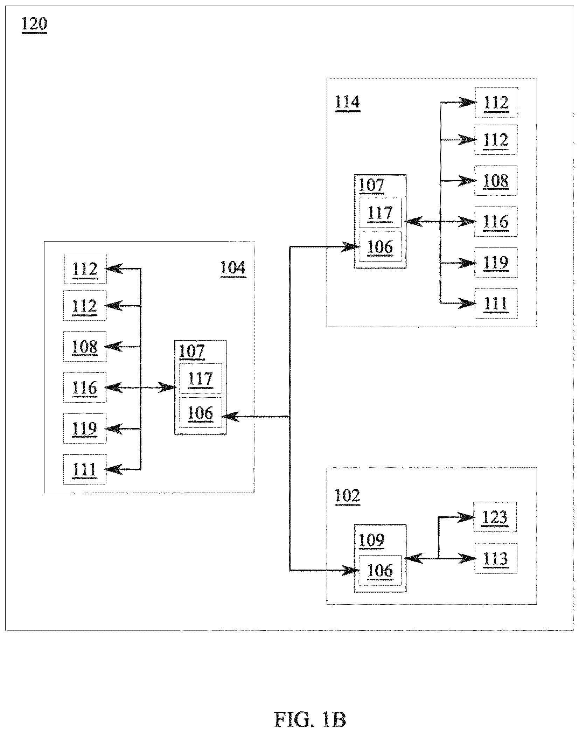

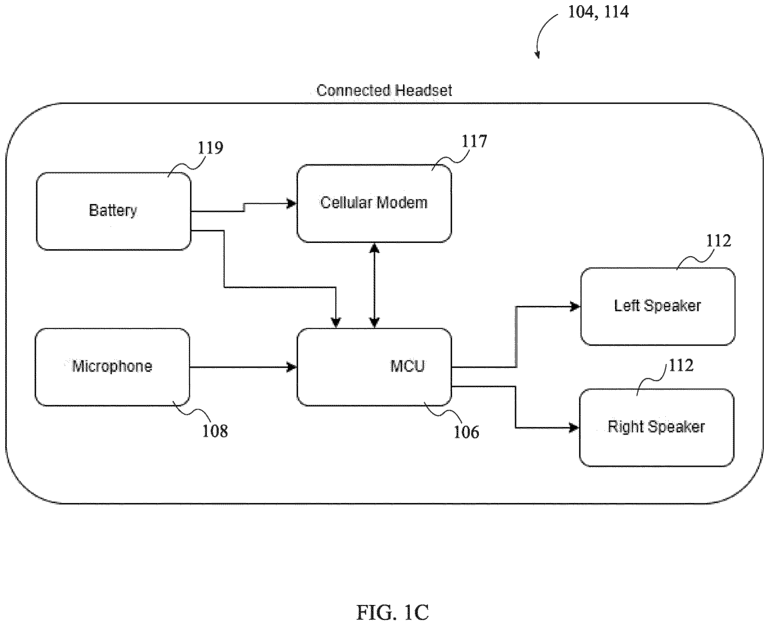

FIGs. 1A-C illustrate that the at least one PPE device 104 may comprise a single device or a plurality of PPE devices (e.g., 104 and 114) that may include wireless headsets, hard hats, facemasks, respirators, eye protection, a wearable device such as a smart watch, and/or other pieces of PPE. In one example, PPE device 104 may be a first wireless headset, while PPE device 114 may be a second wireless headset (which are both further described below). The plurality of pieces of powered device (each individually indicated at 102 of FIG. 1) may refer to an individual tool or set of tools or other objects commonly used to achieve a particular jobsite, including, but not limited to hand tools, saws, compressors, generators, stationary machinery, forklifts, control systems, gauges, data collection devices, and/or other powered device. In some embodiments, the plurality of PPE devices 104, 114 may also be considered powered device 102. The self-contained network 120 may enable a local user to generate and connect to ad hoc communication channels with one or more approved remote devices for purposes including, but not limited to, general communications, broadcast transmissions, emergency alerts, and jobsite management. A communication channel may refer to an active communication port that can be used to relay data between two or more powered devices 102, for example, a first wireless headset 104, a second wireless headset 114, and a hand tool 102. Additionally, the self-contained network 120 may enable location services by determining the position of one or more connected devices relative to other devices connected to the network.

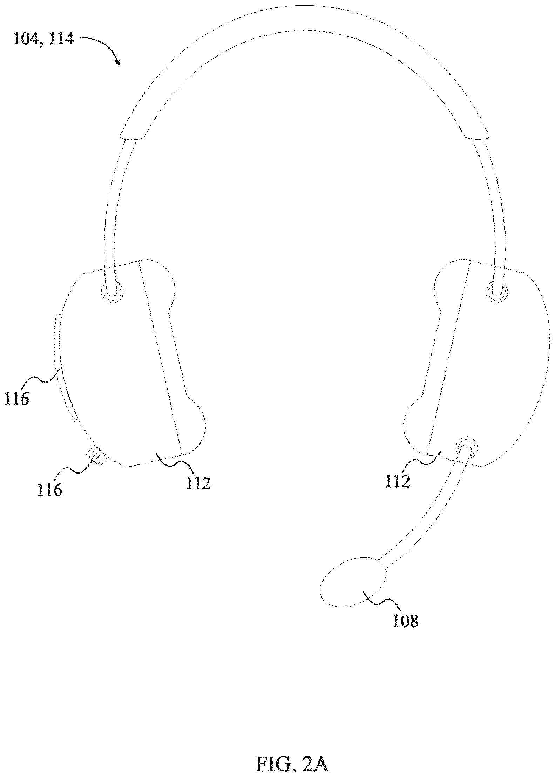

Referring generally to FIGs. 1-9 (which are further described individually below), in an embodiment, the plurality of PPE devices includes a first wireless headset 104 and at least one second wireless headset 114. The first wireless headset 104 may be a hearing protection device (e.g., sound-reducing, or dampening earmuffs) with a low-energy communication transceiver 106 and other communication components (e.g., WiFi radios, cellular radios, BLE transceivers, and NFC transceivers) that are used to relay information between an arbitrary user and the system 100 (FIGs. 2A-2B). Similarly, each second wireless headset 114 may be a hearing protection device with communication components used to relay information between a corresponding remote user and the system 100.

In an embodiment, the first wireless headset 104 and the at least one second wireless headset 114 may be generally identical in construction and may each include a low-energy communication transceiver 106, a speaker 112 having a housing, and a microphone 108, among other components. Accordingly, descriptions relating to the arrangement of components for the "wireless headset" are applicable to both the first wireless headset 104 and the at least one second wireless headset 114. The low-energy communication transceiver 106 may enable two-way communication by wirelessly connecting to a plurality of communication channels using a plurality of data transmission and streaming protocols. Further, the low-energy communication transceiver 106 may implement authentication protocols as described below, and for example, Password Authentication Protocol, Challenge-Handshake Authentication Protocol, open authentication, Wired Equivalent Privacy (WEP), WiFi Protected Access (WPA), WPA2, WPA3, 802.11 standard, Extensible Authentication Protocol (EAP), Lightweight EAP (LEAP), EAP Flexible Authentication by Secure Tunneling (EAP-FAST), Bluetooth LE Secure Connections, Encrypted Advertising Data (EAD), and Protected EAP (PEAP). The authentication protocol enables the first wireless headset 104 to form a self-contained network 120 with second wireless headset 114 and powered device 102 that have been approved or authenticated. In an embodiment, the wireless headsets 101 and 114 may include a battery 119 to power the device. In an embodiment, the battery 119 may be a rechargeable internal battery including one or more battery cells (e.g., lithium or lithium-ion battery cells). In an embodiment, an appropriate charging circuit may be provided to selectively charge the battery 119 from an external power source via, e.g., a USB, a USB-C, or other power supply port provided on the wireless headset 101 and/or 114. In an embodiment, the low-energy communication transceiver 106 may be incorporated into a microcontroller unit (MCU) 107 that governs the operation of the wireless headsets 104, 114.

Further, in an embodiment, at least one of the wireless headsets 101 and/or 114 may be provided with a cellular modem 117. The cellular modem 117 enables the headset to communicate data directly to a cellular network.

In an embodiment, the MCU 107 may be communicably coupled to the low-energy communication transceiver 106, the speaker 112, and the microphone 108. Further, the MCU 107 may be configured to execute all background processes required to facilitate wireless communication, through the wireless headset 104, 114, as described herein. In some embodiments, each of the plurality of powered devices 102 may include a similarly capable MCU 109 that may be configured to execute all background processes required to facilitate wireless communication over the self-contained communications network 120 for the powered device 102, as described herein. In reference to method 900, the phrase "via the [wireless headset]" may be understood to mean the process is being executed by the MCU 107 while the MCU 107 directs the relevant components (e.g., low-energy communication transceiver 106, speaker 112, and microphone 108) of the wireless headsets 104 and/or 114, to perform the necessary functions. Similarly, all references to processes being carried out by the powered device 102 may be understood to mean the process is being executed by the MCU 109 while the MCU 109 directs the relevant components (e.g., low-energy communication transceiver 106 and environmental sensors 113) of the powered device 102, to perform the necessary functions. In an embodiment, data from the self-contained network 120 may be relayed to a companion device 118 for further processing and jobsite management operations.

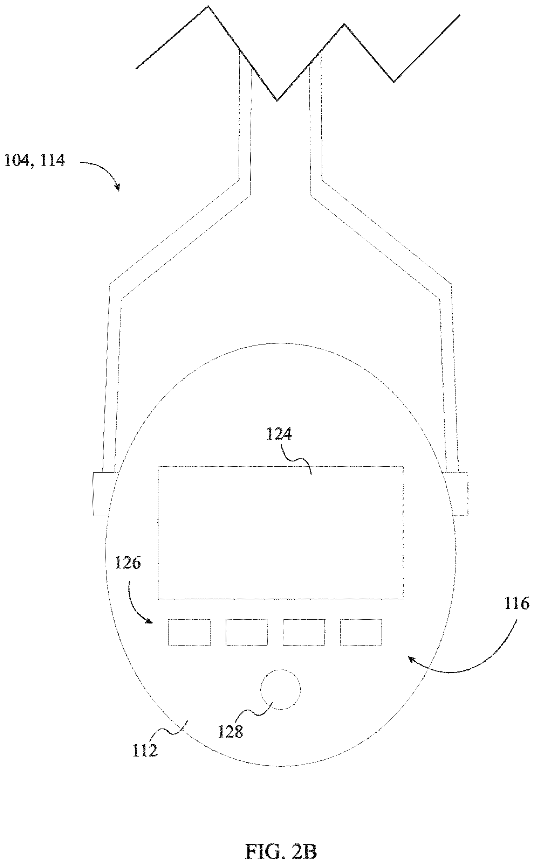

FIG. 1C illustrates an example of a first wireless headset 104 and/or a second wireless headset 114 (e.g., a "connected headset" in FIG. 2). Headset 104 and/or headset 114 may include a battery (e.g., 119 described above), a microphone (e.g., 108 described above), a modem, a microcontroller unit (e.g., MCU in FIG. 2), one or more speakers (e.g., 112 described above), and/or other components. Headsets 104 and/or 114 may be DeWalt^{®} DPG15 headsets, for example, with nRF5340 microcontroller unit development kits. The Microcontroller Unit (MCU) allows for LE Audio communication between two or more integrated headsets. The DeWalt^{®} DPG15 headsets have internal speakers (e.g., 112) for audio reception. The MCU allows for monitoring and interacting with nearby connected tools within range of the headset 104, 114. Tool data and device updates can be transmitted and managed over a cellular connection. A headset 104, 114 may comprise an external button for mode switching, and/or other features as described herein.

FIGs. 2A and 2B illustrate an embodiment where the low-energy communication transceiver 106, the speaker 112, and the microphone 108 may be integrated into the wireless headsets 104 and/or 114, thereby enabling the wireless headset to relay audio information between the system 100 and its users. In further embodiments, a user interface device 116 may be integrated into the wireless headsets 104 and/or 114 and communicably coupled to the MCU 107 such that a user is able to direct the first wireless headset 104 to selectively connect to the at least one second wireless headset 114. As used herein, "selectively connect" shall mean the user is able to choose to connect to one or more second wireless headset 114 or powered device 102 by selecting the desired device (e.g., 114, 102) either through a graphical user interface on the companion device 118 or by manipulating the user interface device 116. For example, if a user would like to establish a communication connection between the first wireless headset 104 and the second wireless headset 114, the user may press a button on the user interface device 116 of the first wireless headset to select the advertising signal of the second wireless headset 114 and initiate communication between the two wireless headsets 104 and 114. The speaker 112 of the first wireless headset 104 may generate a first tone when selecting and authenticating the advertising signal of the second wireless headset 114 and a second tone when the connection has been established. In one embodiment, the user interface device 116 may include a touch screen 124 that enables navigating system menus, and relaying data between the arbitrary user and the first wireless headset. In one embodiment, the user interface device 116 may include a button or keypad 126 that enables navigating system menus, and relaying data between the arbitrary user and the first wireless headset. In an embodiment, the user interface device 116 may include a dial 128 that enables the user to control a viable frequency or signal input for the purposes of changing the volume of the first wireless headset 104, for example.

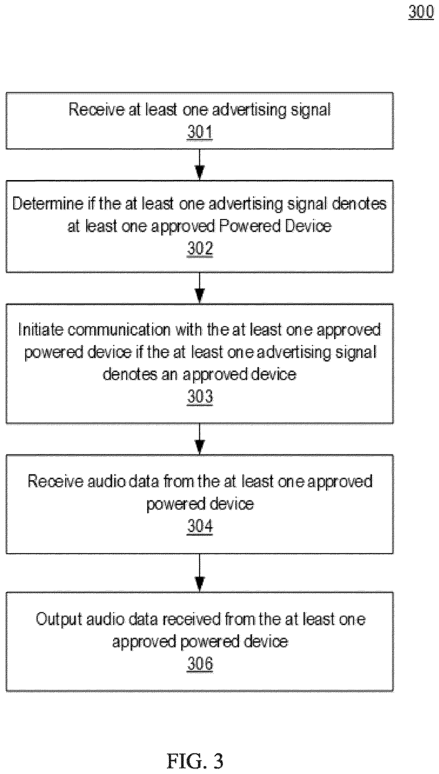

FIG. 3 illustrates an embodiment of a process 300 for jobsite communications management that may be implemented by the above-described system 100. The process 300 may begin at 301 by receiving, via the first wireless headset 104, at least one advertising signal. The advertising signal is a transmission that may be broadcast by each of the plurality of powered devices 102 and acts as a beacon that signifies the powered device 102 is ready to be wirelessly connected. Further, the advertising signal may include a device identifier (ID) token that contains unique information used to identify each second wireless headset 114 and powered device 102. Accordingly, each of the plurality of wireless headsets and the plurality of powered devices 102 continuously broadcasts its position and is therefore constantly ready to form or be connected to a self-contained communications network 120. Broadcast advertising signals may be used for location services. For example, the first wireless headset 104 may determine the relative position or distance of the second wireless headset 114 or the powered device 102 by determining the signal strength of the advertising signal for the second wireless headset 114.

The process 300 may continue at 302 by determining, via the first wireless headset 104, if the at least one advertising signal denotes at least one approved powered device 102. The determining step may execute an authentication protocol (described below) that determines if the second wireless headset 114 and the powered device 102 should be allowed to communicate with the first wireless headset 104. The process 300 may continue at 303 by initiating, via the first wireless headset 104, communication with the at least one approved powered device 102 if the at least one advertising signal denotes an approved device. The user may be given the option to connect to the approved device for various purposes. For example, an audible alert may notify the user that a connection to the approved powered device 102 is pending, and a notification may appear on a screen of the companion device 118 that presents the user with the option to connect to the approved powered device to perform at least one of outputting a broadcast message, receiving a broadcast data stream, initiating two-way communication, and monitoring sensor data.

The process 300 may continue at 304 and 306 by receiving audio data from the at least one approved powered device 102 and outputting, via the first wireless headset 104, audio data received from the at least one approved powered device 102. Accordingly, data received from the approved powered device 102 can be relayed to the user through the first wireless headset 104. As discussed above, the first wireless headset 104 and the second wireless headset 114 may be designed to enable audio communication between the arbitrary user and the at least one remote user. To facilitate this, the process 300 may include a subprocess that begins with receiving, via the first wireless headset 104, local audio data. The local audio data may be audio data that is detected by the microphone 108 of the first wireless headset 104 and may include words spoken by a user, ambient jobsite sounds, inaudible frequencies, and alarms. The subprocess continues by transmitting, via the first wireless headset 104, the local audio data to the at least one approved powered device 102; in this case, the at least one second wireless headset 114. By outputting received audio data and then transmitting local audio data, the first wireless headset 104 enables two-way audio communication with the second wireless headset 114.

In an embodiment, the user may interact with the system 100 through a companion device 118. The companion device 118 may be a processing system capable of executing the back-end processes required to perform the disclosed process 300 for implementing the system 100, may include a wireless radio capable of communicating with one or more wireless headsets 104, 114 as well as other powered devices 102, and may communicate with external systems that are not included in the at least one powered device 102. The companion device 118 may be at least one of a smartphone, a tablet computer, a laptop or desktop computer, a smartwatch, a hand tool, a dedicated control device, a local server, or an Internet of Things (IoT) device. The companion device 118 may include one or more computer processors and/or software to execute instructions. In an embodiment, the arbitrary user may be able to pair the companion device 118 with the first wireless headset 104 such that processing tasks can be offloaded to the companion device 118 by the first wireless headset 104 Further, the companion device 118 enables the arbitrary user to execute granular control over authentication operations and communication processes.

In an embodiment, the process 300 may include a subprocess for implementing the authentication protocols required to initiate communication between the first wireless headset 104, the second wireless headset 114, and other powered devices 102. The subprocess may begin by transmitting, via the first wireless headset 104, the at least one advertising signal to a local user device or companion device 118, wherein the at least one advertising signal is generated by at least one polled powered device 102, and wherein the at least one advertising signal includes the device ID token. The at least one polled powered device 102 may refer to at least one corresponding piece of the plurality of powered devices 102 that is being authenticated prior to connection with the first wireless headset 104. In some embodiments, the at least one polled powered device 102 may refer to all of the powered device 102, wireless headsets 104, 114, and companion devices 118 that are connected to the self-contained communications network 120. In some embodiments, the self-contained communications network 120 may be expanded to include powered devices 102 that are not connected to the self-contained communications network 120 but are broadcasting advertising signals within the range of devices connected to the self-contained communications network 120. The first wireless headset 104 may offload some of the authentication processes to the companion device 118 in addition to transmitting the advertising signal of the polled powered device 102. Accordingly, the subprocess may continue by comparing, via the companion device 118, the device ID token to a list of approved powered device 102. The subprocess may continue by designating, via the companion device 118, the at least one polled powered device 102 as the at least one approved powered device 102 based on the comparison. If the device ID token is found on the list of approved powered device 102, the companion device 118 designates the polled powered device 102 as approved for communication, and the subprocess may continue by initiating, via the first wireless headset 104, communication if the at least one advertising signal denotes an approved device. The companion device 118 relays the results of the authentication phase to the first wireless headset 104 and either approves or denies the request to connect to the polled powered device 102. In some embodiments, the companion device 118 may prompt the arbitrary user to override the authentication protocol and add the device ID token of the polled powered device 102 to the list of approved powered device 102. For example, a notification may appear on the screen of the companion device 118 that alerts the user of the first wireless headset 104 that the second wireless headset 114 is within range but does not have the appropriate credentials to connect to the self-contained communications network 120. The notification may include a request to override the authentication protocol and enable the second wireless headset 114 to connect to the self-contained communications network 120. If the request is approved, or overridden, the first wireless headset 104 may be cleared to communicate with the approved powered device 102 through one or more data streams. A data stream may refer to an active transmission of content or command signals over an established communication channel. The data streams may enable the first wireless headset 104 and the companion device 118 to engage in activities including audio communications, video communications, jobsite management and business intelligence analysis, behavioral-based user personalization, and machine learning optimization techniques. In the embodiment using a pair of wireless headsets, the subprocess can continue by outputting, via the first wireless headset 104, audio data received from the approved powered device 102.

In some embodiments, the arbitrary user may select the specific communication channels on which to communicate. For example, the first wireless headset may be connected to three separate communication channels, a one-on-one channel, a group communications channel, and an emergency alerts channel. If the arbitrary user wants to speak with a single remote user, the arbitrary user may select the one-on-one, or private, channel and then specify a desired remote user to engage in a private conversation via a connected isochronous stream protocol. The group communication channel may be a broadcast channel that enables the arbitrary user to engage in one-to-many communication with a plurality of second wireless headsets 114 via a broadcast isochronous stream protocol. The emergency alert channel may be a passive channel that simply overrides whichever channel the first wireless headset 104 is connected to and relays an emergency alert to the arbitrary user. To facilitate this functionality, the process 300 may include a subprocess that begins by prompting, via the companion device 118, to select a desired communication channel from a plurality of communication channels. For example, a notification may appear on the screen of the companion device 118 that shows the user of the first wireless headset 104 a list of the communication channels that are available on the self-contained communications network 120 and request the user select at least one communication channel. Thus, the arbitrary user may be presented with a list of available communication channels. The subprocess may continue by prompting, via the companion device 118, to select a broadcasting mode. For example, after joining the desired communication channel, a notification may appear on the screen of the companion device 118 that prompts the user of the first wireless headset 104 to enter a broadcasting mode where the user is able to transmit audio data to all second wireless headsets 114 connected to the desired communication channel. In some embodiments, the first wireless headset 104 may be set to a listener mode by default when connecting to a communication channel so that the first wireless headset 104 will not transmit audio. The arbitrary user may be prompted to enter broadcast mode to begin talking on the communication channel.

The subprocess may continue by receiving, via the first wireless headset 104, local sensor data. In some embodiments, at least one environmental sensor 111 is integrated into each wireless headset and may include temperature sensors for measuring ambient temperature, chemical sensors for and detecting hazardous chemicals, heartrate sensors for measuring healthcare information, gyroscopes, and accelerometers for measuring orientation of the headsets 104 and/or 114, GPS sensors for determining a location of the headset, and fingerprint readers for capturing fingerprints of the user. However, in an embodiment, the local sensor data captured by the first wireless headset 104 is audio data captured by the microphone 108 or a vibration sensor. The subprocess may continue by broadcasting, via the first wireless headset 104, local sensor data via the desired communication channel. Accordingly, the user's voice can by broadcast to all second wireless headsets 114 connected to the desired communication channel. While an embodiment using a first wireless headset 104 and a second wireless headset 114 has been discussed, the disclosed system may be used to relay varied forms of content between the arbitrary user and the remote user including, videos, photographs, location data, biometric data, and environmental sensor data. In further embodiments, the arbitrary user may choose to connect the first wireless headset 104 to a plurality of companion devices 118 by selecting a communication device channel shared by the first wireless device and at least one corresponding companion device 118.

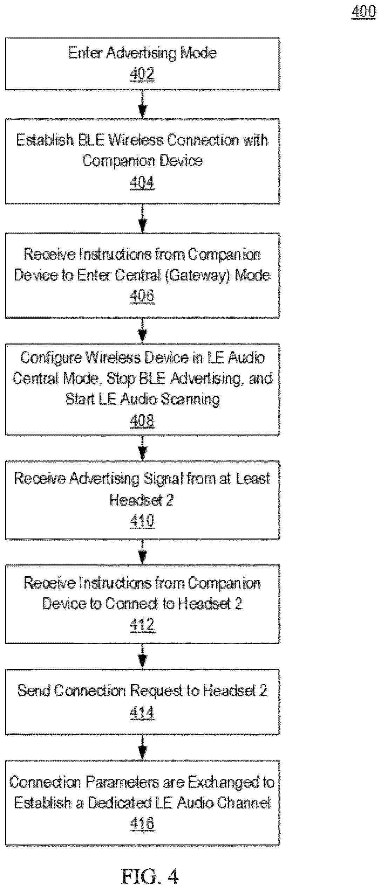

FIG. 4 depicts an exemplary simple process 400 flow diagram executed by the first wireless headset 104 (referred to herein as Headset 1) to establish a LE Audio wireless connection with the second wireless headset 114 (herein referred to as Headset 2) to allow users of the headsets to engage in one-to-one audio communication. Within a construction jobsite environment, this process allows a construction worker or a site manager with a first PPE headset to establish a direct wireless connection with a second PPE headset of another construction worker to send and receive live audio communication. Construction personnel may thus discuss and coordinate project tasks from remote parts of the jobsite via a dedicated and targeted wireless peer-to-peer audio stream. In an embodiment, each PPE headset may be further provided with noise-cancelling capabilities, enabling the construction workers to send and receive targeted audio communications to and from their coworkers with minimal noise and interference in an otherwise noisy jobsite environment.

In an embodiment, the LE Audio wireless connection between the two headsets utilizes a Connected Isochronous Stream (CIS) protocol, which provides a point-to-point bidirectional audio transmission stream between a central device and one or more peripheral devices. To make this possible, according to an embodiment, audio headsets within the construction site may be capable of being configured in either a central (i.e., gateway) mode or a peripheral mode. In an embodiment, each headset may be provided with a toggle switch on the housing of the speaker 112 of the headset that allows the operator to switch between the central mode and the peripheral mode. Alternatively, companion device 118 may be utilized to make a wireless connection with a given headset, provide a display to the user including a mode setting associated with the headset, receive a user instruction to change the connectivity mode of the headset from a peripheral mode to a gateway mode or vice versa, and transmit the connectivity mode to the headset. In some embodiments, by default, all headsets 104, 114 are in peripheral mode and may be configured in central mode upon receipt of an instruction from the companion device 118 to change to a gateway mode.

The process diagram of FIG. 4 is described here in detail. It is noted that in FIG. 4, Headset 1 is configured as a central device and Headset 2 is configured as a peripheral device by way of an example to facilitate establishment of an LE audio wireless communication link between the two headsets using the CIS protocol.

In this embodiment, the process 400 executed by Headset 1 starts, e.g., upon the headset being turned ON or a LE Audio button of the headset being pressed by the user. In an embodiment, in step 402, Headset 1 enters an advertising mode, where it periodically transmits an advertising signal. In an embodiment, the advertising signal may include at least a unique identifier associated with the LE module of the headset, although other information relating to the headset (e.g., state of charge of the battery, etc.) may be additionally transmitted. The advertising signal may be scanned by the companion device 118, where a display panel of the companion device displays availability of Headset 1 to the user, and the user can select an option to make a wireless connection to Headset 1. In an embodiment, in step 404, in response to receiving an instruction from the companion device 118 to make a wireless connection, Headset 1 exchanges connection parameters with the companion device 118 to establish a Bluetooth Low Energy (BLE) wireless connection with the companion device 118.

In an embodiment, the user of the companion device 118 may be further provided with a display of an option to switch the LE Audio connectivity mode of Headset 1 from peripheral mode to central mode and vice versa. This may be done via, e.g., an activation toggle switch displayed on the display panel of the companion device 118 to the user. In this manner, the user of the companion device 118 may wirelessly configure any headset within the worksite as a peripheral LE Audio device or a central LE Audio device.

In an embodiment, after the user's selection of the option to switch Headset 1 to central mode, in step 406, Headset 1 receives instruction from the companion device 118 to enter central mode. In an embodiment, in step 408, Headset 1 accordingly stops BLE advertising, configures the wireless module in LE Audio central mode, and starts a process of scanning nearby devices for advertising signals.

While the steps describe above relate to using the companion device 118 to configure Headset 1 in LE Audio central mode, according to an alternative embodiment, the mode configuration of Headset 1 may be set directly by the user via one or more of the keypads or buttons 126, or a separate mechanical toggle switch mounted on the housing.

In yet another embodiment, companion device 118 may be configured to execute an onboarding process to designate and configure appropriate devices (including Headset 1) within a worksite in LE Audio central model. In this embodiment, a list of authorized devices (including Headset 1 in this example) associated with the user is stored on a remote server (e.g., a Cloud server). The list is onboarded by the companion device 118 and instructions are sent to the authorized devices (including Headset 1) to self-configure in central mode.

In an embodiment, after Headset 1 is configured in central mode, in step 410, during the scanning process, Headset 1 picks up an advertising signal from nearby devices, which in this example includes Headset 2. In an embodiment, Headset 1 may transmit a list of scanned devices (i.e., devices whose advertising signal was read by Headset 1) to the companion device 118, which in turn displays a list of the scanned devices to the user. The user may then select at least one of the scanned devices (in this example, Headset 2) from the list, thus instructing Headset 1 to make a LE Audio connection to Headset 2. In an embodiment, in step 412, the instruction to make a connection to Headset 2 is received by Headset 1 from the companion device 118.

According to an alternative embodiment, the companion device 118 may perform the scanning process and display a list of headset devices in the area that are in peripheral mode to the user. This list, along with a user's selection of at least one device from the list (in this example Headset 2), is transmitted to Headset 1. Headset 1 accordingly scans the area for an advertisement signal received specifically from Headset 2 to initiate a connection.

In yet another embodiment, the companion device 118 may onboard a list of devices (including Headset 2) that Headset 1 is authorized to connect to from the remote server (e.g., Cloud server). In an embodiment, the companion device 118 may also scan the area for devices (including Headset 2) that are in advertising mode. The full list of devices obtained from the onboarding process, and/or a subset of the list that are scannable by the companion device 118, is transmitted to Headset 1. In this manner, the selection of devices to connect to may be performed automatically and without any input from the user.

In an embodiment, in step 414, a request to establish an LE Audio is sent from Headset 1 to Headset 2. In an embodiment, in step 416, Headset 1 exchange the necessary connection parameters with Headset 2 to establish an LE Audio connection. Following this exchange, in an embodiment, a dedicated LE Audio channel is assigned to the communication network to establish a wireless link between Headset 1 and Headset 2.

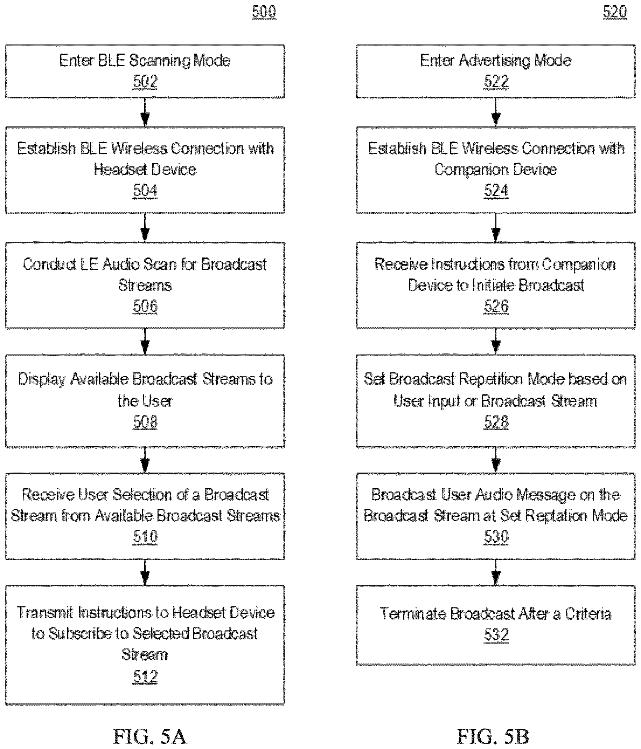

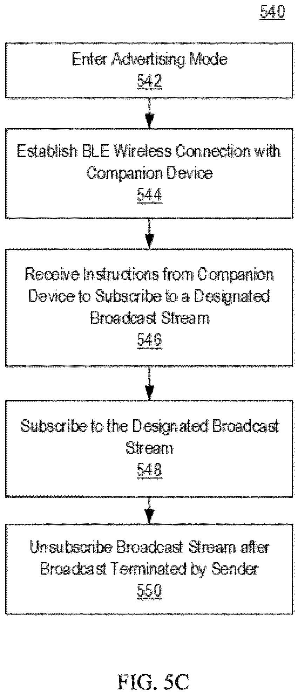

FIG. 5A depicts an exemplary process 500 flow diagram executed by companion device 118 to allow a user to configure a headset within the jobsite to designate a broadcast stream (or broadcast channel) for broadcasting an audio message or announcement via the headset. FIG. 5B depicts an associated exemplary process 520 flow diagram executed by the first wireless headset 104 (referred to herein as Headset 1) to be configured by the companion device 118 for broadcasting the audio message on the designated broadcast stream. FIG. 5C depicts an associated exemplary process 540 flow diagram executed by the second wireless headset 114 (herein referred to as Headset 2) to subscribe to the designated broadcast stream. Within a jobsite environment, these processes allow a user (such as a site manager) to utilize an app on a mobile device or other accompanying devices to configure a first PPE headset as a broadcaster and designate a broadcast stream for the first PPE headset to broadcast announcement and/or other audio message over. Users of other PPE headsets within the worksite can then tune into the designated broadcast stream to listen to the announcement and/or other audio messages.

In an embodiment, the broadcast stream utilizes a Broadcast Isochronous Stream (BIS) protocol, which provides a logical transport for a device to broadcast audio data to multiple LE audio receiving devices. The BIS protocol is a feature of the LE Audio system introduced in Bluetooth 5.2 and is designed to work with low-power, battery powered audio devices. The system described herein enables a user to selectively configure one of a number of audio headset devices in a broadcast mode to broadcast an announcement within a construction worksite and allows other users to selectively tune in and listen to the broadcasted announcement.

Referring to FIG. 5A, process 500 executed by the companion device 118 starts with the user launching an app on the companion device. In an embodiment, in step 502, the companion device enters a BLE scanning mode, and step 504, it establishes a BLE wireless connection with a headset device (in this example Headset 1). In an embodiment, Headset 1 may be selected by the user of the companion device from a list of available devices to make a wireless connection to in order to allow the user to configure Headset 1 in a broadcast mode. In an embodiment, in step 506, the companion device conducts a LE audio scan for available broadcast streams. These may include, for example, a work stream used for broadcasting communication related to work and the jobsite, an announcement stream used for broadcasting announcements, an emergency stream used for broadcasting alerts and other emergency communication, a music stream in which a user may broadcast a music livestream, etc. In an embodiment, in step 508, the companion device displays a list of the available broadcast streams to the user. In an embodiment, a broadcast stream that is currently unavailable or used by another user may be shown in a different color than available streams. In an embodiment, in step 510, the companion device receives the user's selection of a broadcast stream from the list of available broadcast streams via the display. In an embodiment, in step 512, the companion device transmits instructions to the headset device (i.e., Headset 1) to broadcast on the selected broadcast stream. This instruction is received by Headset 1, which accordingly configures itself in broadcast mode, as described below.

Referring to FIG. 5B, process 520 executed by Headset 1 starts, e.g., upon the headset being turned ON or a LE Audio button of the headset being pressed by the user. In an embodiment, in step 522, Headset 1 enters an advertising mode, where it periodically transmits an advertising signal. In an embodiment, the advertising signal may include at least a unique identifier associated with the LE module of the headset, although other information relating to the headset (e.g., state of charge of the battery, etc.) may be additionally transmitted. The advertising signal is scanned by the companion device 118 as described above. In an embodiment, in step 524, in response to receiving an instruction from the companion device 118 to make a wireless connection, Headset 1 exchanges connection parameters with the companion device 118 to establish a Bluetooth Low Energy (BLE) wireless connection with the companion device 118. In an embodiment, after the connection has been established, and following the user selecting a broadcast stream for Headset 1 via the companion device 118, as described in step 512 above, in step 526, Headset 1 wirelessly receives instructions to initiate a broadcast along with information relating to the selected broadcast stream from the companion device 118. In an embodiment, in step 528, Headset 1 configures a broadcast repetition mode for the broadcast. The repetition mode may refer to the frequency of repletion or the total duration of the broadcast message. In an embodiment, Headset 1 calculates the repetition mode based on a user input provided via the companion device 118. Alternatively, in an embodiment, the repetition mode may be preset in relation to the designated broadcast stream (e.g., messages at 2 seconds apart for 15 total minutes for an emergency stream, messages at 10 seconds apart for 2 total hours for a work stream, and no repetition for a music stream). In an embodiment, in step 530, Headset 1 is ready for streaming, and begins broadcasting the user's audio message on the designated broadcast stream. In an embodiment, the broadcast continues at the set repetition mode until step 532, in which Headset 1 terminates the broadcast on the designated channel based on a criterion. In an embodiment, the criterion is met if the set time in the repetition mode has expired, if the broadcast is interrupted by the user via a command received on the companion device or on the headset directly, or if there is an override of the broadcast from a user with proper authorization.

Referring to FIG. 5C, process 540 executed by Headset 2 to subscribe to the broadcast stream of Headset 1 is now described. In an embodiment, similar to process 520 above, process 540 starts, e.g., upon the headset being turned ON or a LE Audio button of the headset being pressed by the user. In an embodiment, in step 542, Headset 2 enters an advertising mode, where it periodically transmits an advertising signal. The advertising signal is scanned by a companion device in a manner similar to above. In an embodiment, in step 524, in response to receiving an instruction from the companion device to make a wireless connection, Headset 2 exchanges connection parameters with the companion device to establish a Bluetooth Low Energy (BLE) wireless connection. In an embodiment, the companion device may be different from the companion device 118 discussed above. However, the companion device may execute steps similar to process 500 described above to present the user of Headset 2 with a list of available steams to subscribe to (i.e., tune into and listen to). In an embodiment, the subscription to the broadcast stream continued until the broadcast has been terminated by the sender in step 550.

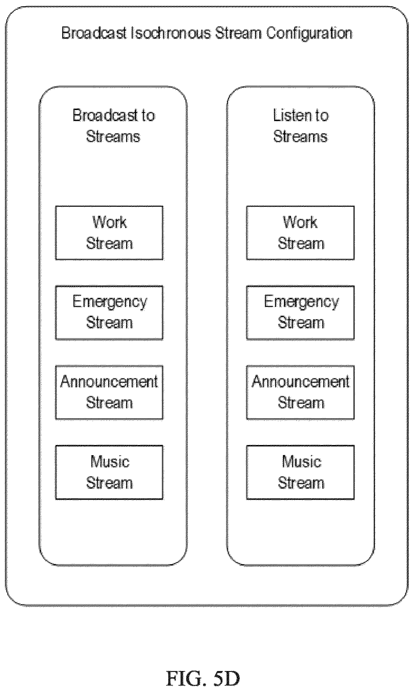

FIG. 5D illustrates an example display 560 of a companion application on the companion device 118 for selecting a broadcast channel, according to an embodiment. In an embodiment, the display 560 includes a list of broadcast steams for the user to broadcast to via the user's PPE device, as described above with reference to FIGs. 5A and 5B. In an embodiment, the display 560 additionally includes a list of streams that the user's PPE device can subscribe and listen to, as described above with reference to FIG. 5C.

In an embodiment, the companion device 118 may be programmed to assign a default broadcast stream with a particular user. For example, a site manager may be designated to broadcast to the emergency broadcast by default unless the user instructs an alternative broadcast stream. Similarly, site manager's device may be configured to push a command to all the companion devices 118 and/or all the PPE devices within the worksite to configure the PPE devices to subscribe to a given broadcast stream (e.g., the emergency stream in the event of an emergency announcement or an announcement stream in the event of an important announcement). This may be done, for example, by pushing an override command, through a remote server, into any device that is wirelessly connected within the jobsite.

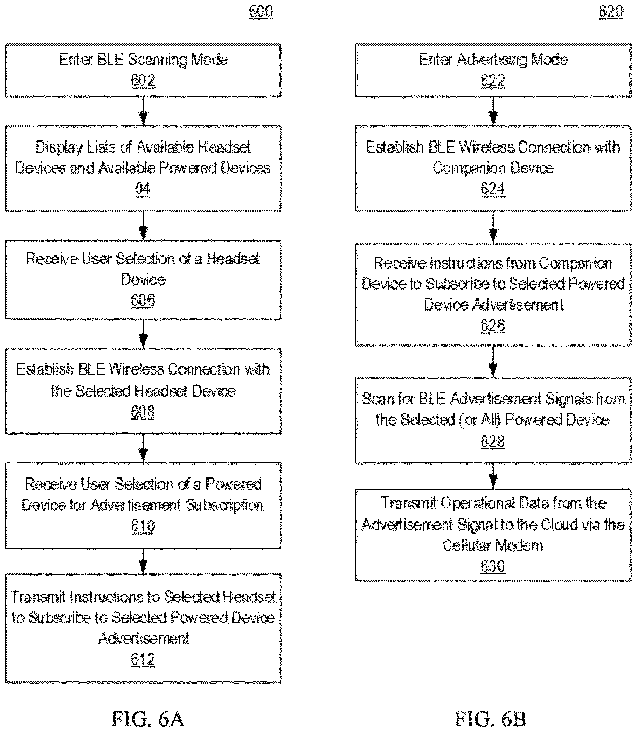

FIG. 6A depicts an exemplary process 600 flow diagram executed by companion device 118 to allow a user to configure a headset within the jobsite to designate a powered device 102 to download data from. FIG. 6B depicts an associated exemplary process 620 flow diagram executed by the first wireless headset 104 (referred to herein as Headset 1) to be configured to subscribe to advertising signals of the selected powered device 102. Within a jobsite environment, these processes allow a user (such as a site manager) to utilize an app on a mobile device or other accompanying devices to configure a PPE headset of a construction worker to receive advertising data from one or more powered device 102 as the construction worker moves around the jobsite. This allows the PPE headset to gather various data types relates to operation of different powered device 102, which it can then transfer to a remote cloud server.

In an embodiment, the powered device 102 may include a variety of different power tools, battery packs, battery chargers, gardening and maintenance equipment, lighting products, fans, lasers, etc. Exemplary power tools include, but is not limited to, drills, impact drivers, saws, grinders, routers, concrete products (e.g., screeds, rammers, plate compactors, etc.), nailers, etc. The power tools may be corded and powered by an AC power supply, or cordless and powered by a removeable battery pack. The battery packs may be, for example, 20V Max lithium-ion battery packs including a series of battery cells electrically connected to a terminal block. In an embodiment, one or more of the powered devices 102 may include a wireless circuit such as a BLE module housed therein. In an embodiment, the wireless circuit is powered by a coin cell or other internal battery to ensure that the wireless circuit remains powered even when the powered device is not coupled to a power supply. In another embodiment, the wireless circuit may be housed in a wireless tag module that is secured to an external surface of, or within a receptacle of, the powered device 102.

In an embodiment, the wireless circuit of the powered device is configured to periodically transmit an advertising signal. In an embodiment, the advertising signal may include at least a unique identifier associated with the powered device, although other information relating to the powered device may be additionally included in the advertising signal. In an embodiment, such information includes operational information related to the powered device, including, but is not limited to, power tool trigger pulls and trigger release events, power tool voltage and current information, power tool shutdown events, tool clutch position, tool operating mode, battery pack voltage and temperature information, coin cell voltage, gyroscope and/or accelerometer information, etc. In an embodiment, the periodic transmission of advertising signals including this information allows operational information related to the powered devices to be picked up by nearby gateway devices, which can then upload that information to a remote Cloud server for data processing, without establishing a two-way communication with the powered device.

In an embodiment, the advertising signal may implement an extended scan response protocol. In this embodiment, the advertising signal of the wireless circuit of the powered device (i.e., peripheral device) include, in the header, an indication that it is `scannable'. The advertising signal is scanned by a gateway (central) device, which may be configured to scan either 'passively' or `actively'. If the scan is passive, then the `scannable' indication in the peripheral header is ignored. However, if the scan is 'active', the central device sends a scan request in response to reception of the `scannable' advertisement back to the peripheral device. The peripheral device sends the scan response in response to the scan request made by the central device. The length of the scan response can be extended using the Extended Scan Response advertisement protocol to include the operational information related to powered device, as described above.

Referring to FIG. 6A, process 600 executed by the companion device 118 starts with the user launching an app on the companion device. In an embodiment, in step 602, the companion device enters a BLE scanning mode, and step 604, it displays a list of available devices (including a list of available headset devices and a list of available powered devices 102) to the user. In an embodiment, in step 606, the companion device 118 receives a user's selection of a headset device (e.g., first wireless headset 104) from the list of available headset devices. In an embodiment, in step 608, the companion device 118 establishes a BLE wireless connection with the selected headset device (e.g., first wireless headset 104). In an embodiment, in step 610, the companion device 118 further receives a user's selection of a powered device for advertisement subscription. The term 'advertisement subscription' in this embodiment refers to configuring the headset device to scan for BLE advertisement signals from the selected powered device and/or establish an Extended Scan Response communication with the selected powered device to receive operational information related to the powered device. In an embodiment, in step 612, the companion device 118 transmits instructions to the selected headset to subscribe to the selected powered device advertisement. In an embodiment, the instructions to the selected headset may be to subscribe to advertisement of a plurality of powered devices (e.g., as selected specifically by a user), of a subset of powered devices (e.g., all battery packs, all grinders, or all lights within the worksite), or all the powered devices within the worksite.

Referring to FIG. 6B, process 620 executed by the headset (e.g., first wireless headset 104) start, e.g., upon the headset being turned ON or a LE Audio button of the headset being pressed by the user. In an embodiment, in step 622, the headset enters an advertising mode, where it periodically transmits an advertising signal. In an embodiment, the advertising signal may include at least a unique identifier associated with the LE module of the headset, although other information relating to the headset (e.g., state of charge of the battery, etc.) may be additionally transmitted. The advertising signal is scanned by the companion device 118 as described above. In an embodiment, in step 624, in response to receiving an instruction from the companion device 118 to make a wireless connection, the headset exchanges connection parameters with the companion device 118 to establish a Bluetooth Low Energy (BLE) wireless connection with the companion device 118. In an embodiment, after the connection has been established, and following the user selecting a powered device for advertisement subscription via the companion device 118, as described in step 610 above, in step 626, the headset wirelessly receives instructions to subscribe to the advertisement signals of the selected powered device. In an embodiment, in step 628, the headset conducts a scan of all advertising signals within its range to locate BLE advertising signals from the selected powered device. It should be noted that, in an alternative embodiment, the headset may be configured to look for advertisement signals of a plurality of powered devices (e.g., as selected specifically by a user), of a subset of powered devices (e.g., all battery packs, all grinders, or all lights within the worksite), or all the powered devices within the worksite. In an embodiment, in step 630, the headset transmits the advertisement data, including the operational data related to the powered device, to a remote Cloud server via the cellular modem 117.

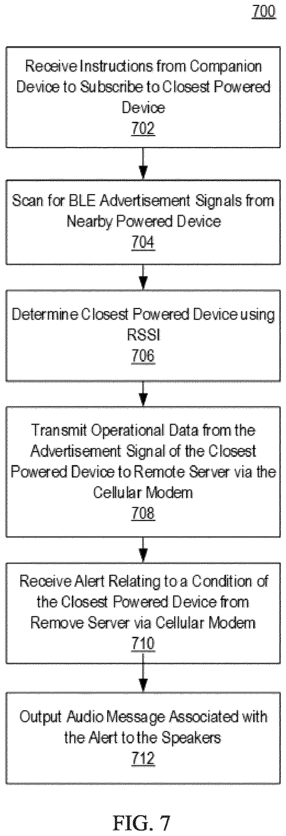

FIG. 7 depicts an exemplary process 700 flow diagram executed by wireless headset 104 to identify the nearest powered device and subscribe to advertising signals of that powered device. This process is similar to process 620 described above in some respects, but it enables the headset to automatically identify the powered device that it is located closest to and upload only the operational data of that powered device to the remote Cloud server. In an embodiment, this allows the headset to monitor and stream only data of the powered device that is being operated on by the wearer of the headset. In an embodiment, the headset may be further configured to provide audio alerts relating to the operation of the powered device to the operator.

In an embodiment, process 700 start, e.g., after the headset has been paired to a companion device 118 using the steps described in previous embodiments. In an embodiment, in step 702, the headset receives instructions from the companion device to subscribe to the closest powered device. This step may be initiated upon a user selecting an option on the display of the companion device 118 to configure the headset in a mode to monitor the nearest device. Alternatively, in an embodiment, the headset may be configured in this mode via a dedicated button on the headset housing. In an embodiment, in step 704, the headset scans for BLE advertisement signals from nearby powered devices. In an embodiment, in step 706, the headset determines the closest powered device using a Received Signal Strength Indicator (RSSI), which is a measurement of how well a device can receive a signal from a transmitter and generally correlates to the distance between the transmitter and the receiver. In an embodiment, other protocols such as Time-of-Flight (ToF) may be alternatively utilized. In an embodiment, in step 708, after the closest powered device has been identified, the headset monitors only the advertisement signals from that powered device and transmits operational data from the advertisement signals of the powered device to the remote Cloud server via the cellular modem 117.

In an embodiment, the operational data related to the powered device are processed by the remote Cloud server. As previously discussed, the operational data may include, but is not limited to, power tool trigger pulls and trigger release events, power tool voltage and current information, power tool shutdown events, tool clutch position, tool operating mode, battery pack voltage and temperature information, coin cell voltage, gyroscope and/or accelerometer information, etc. In an embodiment, the remote Cloud server may identify certain conditions relating to the powered device based on the operational data. For example, the server might identify that the coin cell voltage is too low (e.g., if voltage falls below 20% of battery life), battery voltage is too low, the battery pack temperature is too high due to overuse or repeated overcurrent events, the power tool is encountering too many kickback events, the power tool has reached a vibration limit, etc.

In a further embodiment, the server may be configured to communicate the detected conditions to the headset to cause the headset to output an audio alert to the user. For example, if the coin cell or the battery voltage is too low, the headset may play an audio message to the user indicative of the voltage level or the amount of time left on the battery charge with continued usage. In another example, if the battery temperature is too high, the headset may play an audio message to the user to alert the user to pause or slow down operation. In yet another example, if the power tool has encountered too many kickback events or reached the vibration limit, the headset may play an audio message to the user to alert the user of the kickback or vibration limit having been reached.

Accordingly, in an embodiment, in step 710, the headset receives an alert relating to an operating condition the closest powered device from the remote Cloud server via the cellular modem. In an embodiment, in step 712, the headset outputs an audio message associated with the alert to the speakers 112. In an embodiment, the headset may store audio files associated with different alerts in its internal memory. Alternatively, the audio message may be received by the headset from the remote Cloud server in lieu of the alert.

In an alternative embodiment, the headset may process the operational data of the powered device in its internal microcontroller unit 107 and create the audio alerts without feedback from the remote Cloud server.

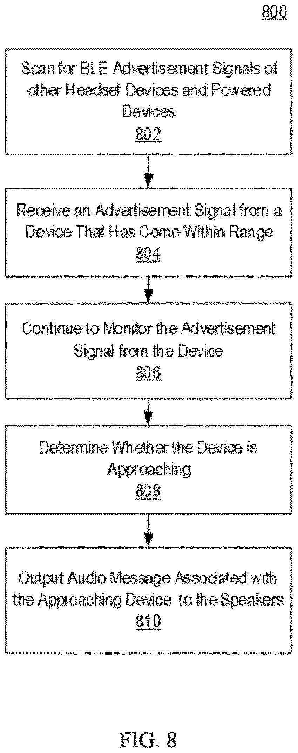

FIG. 8 depicts an exemplary process 800 flow diagram executed by wireless headset 104 to identify approaching powered devices or other headset devices and provide alerts to the user accordingly, according to an embodiment. This process enables the headset to monitor the approximate distance between itself and other PPE devices (e.g., headsets 114) or other powered devices (e.g., power tools, battery packs, etc. that may be on a person or a moving vehicle of another user), identify if the monitored PPE device or powered device is approaching, and play an audio message to the user alerting the user of an approaching device and/or identifying the user of the approaching device. In a construction jobsite, this process is particularly useful to a construction worker whose line of site is obstructed or is distracted with tasks being performed.

In an embodiment, process 800 start, e.g., after the headset has been turned ON or is instructed by a user (e.g., directly via the headset interface or via instructions from companion device 118) to enter a mode of detecting approaching devices. In an embodiment, in step 802, the headset scans for BLE advertisement signals from other headset devices and other powered devices. In an embodiment, in step 804, the headset receives an advertisement signal from a headset device or a powered device that has come within its wireless range. In an embodiment, in step 806, the headset continues to monitor the advertisement signal from the device that has come within its wireless range. In an embodiment, in step 808, the headset determines if the monitored device is approaching in the direction of the headset. In an embodiment, this may be done using Received Signal Strength Indicator (RSSI), Time-of-Flight (ToF), or other protocols, where the headset may extrapolate a linear movement of the monitored device and determine if an axis of linear movement is in the direction of the headset. In a further embodiment, the headset may calculate a distance of the monitored device to the headset and/or a speed of movement of the monitored device towards the headset, based on RSSI or ToF data. In an embodiment, in step 810, if the headset determines that the monitored device is approaching the headset, it outputs an audio message associated with the approaching device to the speakers 112. In an embodiment, the audio message may include an estimated distance, estimated speed of travel, identity of the approaching device, or identify of the user of the approaching device. Examples of such audio messages may include: "drill DCD796B#1 is approaching and is 5 feet away," "battery pack DCB606#10 is approaching rapidly," "John's drill is approaching slowly and is 10 feet away," etc.

In an embodiment, the companion device 118 may be utilized to configure audio messages of the headset based on the type of powered device, the owner of the powered device, speed of approach, distance, etc. For example, a user may use the companion device 119 to configure the headset to provide a strong warning (e.g., "alert, move out of the way immediately") if heavy equipment such as a concrete rammer is approaching, and a more gentle warning (e.g., "device approaching, be mindful of your surroundings") if a less hazardous device is approaching. In another example, the user may use the companion device 119 to configure the headset to issue different audio messages for different users (e.g., if user = John send all warnings; if user = Steve send no warnings).

Returning to the discussion of FIGs. 1-9 generally, and as described above, embodiments of the system 100 may enable jobsite management operations including, monitoring worker productivity, tool usage, battery state, chemical exposure metrics, and emergency events. A subprocess for achieving this functionality may begin by receiving, via the first wireless headset 104, remote sensor data from at least one arbitrary remote piece of equipment included in the plurality of powered devices 102. The remote sensor data may include tool usage statistics, worker location data, and hazardous condition alerts. In one embodiment, the arbitrary user may be an administrator that travels around the jobsite and uses the first wireless headset 104 to gather remote sensor data from every powered device 102 within range. Alternatively, the administrator may poll the remote sensor data from all \powered devices 102 that are connected to the self-contained network 120. The gathered remote sensor data may be analyzed by the companion device 118 and the results of this analysis may be relayed to the administrator through both the first wireless headset 104 and the companion device 118. In some embodiments, the polling of remote powered devices 102 can be a two-step process where general equipment information is included in the advertising signal that is continuously broadcast by the plurality of powered devices 102. The administrator may use the companion device 118 to direct the first wireless headset 104 to request an extended scan response for more complete data via a second advertising signal on a one-time broadcast. In some embodiments, the subprocess continues by transmitting, via the companion device 118, the remote sensor data to a system server 110.

In some embodiments, the system server 110 may be any suitable computing device and/or data processing apparatus capable of communicating with computing devices, other remote devices (e.g., powered device 102, wireless headsets 104 and /or 114, and companion device 118) or computing networks (e.g., the self-contained communications network 120), receiving, transmitting, and storing electronic information and processing requests as further described herein. System server 110 is therefore intended to represent various forms of digital computers, such as laptops, desktops, workstations, personal digital assistants, servers, blade servers, mainframes, and other appropriate computers and/or networked or cloud-based computing systems capable of employing the systems and methods described herein.

System server 110 may include a server processor 115, which is communicably coupled to various hardware and software components that serve to enable operation of the system 100. For example, system server 110 may be positioned external to the self-contained communications network 120 such that the companion device 118 must act as an intermediary for data exchange between system server 110, and/or server processor 115, and the components encapsulated within the self-contained communications network 120 (e.g., powered device 102 and wireless headsets 104 and /or 114). Additionally, the system server 110 may be capable of communicating with additional external systems through communications network 105. Server processor 115 serves to execute instructions to perform various operations relating to jobsite communications management, and other functions of embodiments of the disclosed devices as described in greater detail herein. For example, server processor 115 may respond to a request for a list of approved powered devices 102 by retrieving the list from a database connected to network 105. In an embodiment, server processor 115 may perform the authentication processes by comparing the device ID token of the polled powered device 102 to the list of approved powered devices 102 and then alerting the companion device 118 if the polled powered device 102 is approved or denied. Server processor 115 may be one or a number of processors, a central processing unit (CPU), a graphics processing unit (GPU), a multi-processor core, or any other type of processor, depending on the particular implementation.

System server 110 may be configured to communicate via a communication interface 121 with various other devices (e.g., companion device 118, database 125) connected to network 105. For example, the communication interface 121 of system server 110 may include but is not limited to, a modem, a Network interface Card (NIC), an integrated network interface, a radio frequency transmitter/receiver (e.g., Bluetooth wireless connection, cellular, Near-Field Communication (NFC) protocol, a satellite communication transmitter/receiver, an infrared port, a USB connection, and/or any other such interfaces for connecting the system server 110 to other computing devices and/or communications networks 105 such as private networks and the Internet. In an embodiment, system server 110 may use network 105 to communicate with a database for data retrieval and storage. In an embodiment, system server 110 may use network 105 to communicate with an emergency response system whenever an emergency event is detected, as described herein. In an embodiment, system server 110 may use network 105 to function as a cloud data center capable of analyzing data collected from the powered device 102 to perform jobsite management operations, including determining jobsite productivity, issuing remote broadcasts, authenticating devices, streaming audio and video files, determining the proximity to, and/or the location of, powered devices 102 relative to each other, and .acting as a relay or multiplexer for communication channels operating on the system 100.

In an embodiment, the system 100 may generate alerts for the arbitrary user based on information included in the local sensor data and the remote sensor data. For example, the system 100 may determine, via the companion device 118, a physical location of the first wireless headset 104 relative to the at least one polled powered device 102 based on a signal strength of the at least one advertising signal. The system 100 may generate an alert if the physical location does not correspond to a preset value or satisfy predefined conditions (e.g., a powered device 102 is approaching the first wireless headset 104 too quickly). In some embodiments, the first wireless headset 104 may monitor the local sensor data to determine if environmental conditions denote a notable event. The term "notable event" may refer to at least one change of environmental conditions, as measured by the remote sensor data or the local sensor data, that increases above, or depreciates below, a predefined threshold. Further, the first wireless headset 104 or the companion device 118 may identify a notable event if the remote sensor data or the local sensor data satisfy predefined conditions. The first wireless headset 104 may output a notable event alert after determining that a notable event has occurred based on the environmental sensor data. For example, if the remote sensor data from a drill indicates a low battery, the notable event alert may be an audio message that reminds the user to change the battery 123 and predicts the remaining battery run time.

In some embodiments, the system 100 may determine, via the first wireless headset 104, if an emergency event has occurred based on the local sensor data. For example, the first wireless headset 104 may use accelerometer data to determine if the arbitrary user has fallen over and then subsequently broadcast, via the first wireless headset 104, a high-priority emergency alert via at least one available communication channel based on the determining. The emergency alert may indicate the time and location of the emergency event and give recommendations for remediation. In some embodiments, the system 100 may employ a tiered communication system that prioritizes some data streams and communication channels over others. For example, receiving a high-priority emergency message on one communication channel will interrupt any data stream of lower priority to which the first wireless headset 104 may be connected. This priority management subprocess may begin by connecting, via the first wireless headset 104, to a first communication channel, wherein the first communication channel is associated with a first priority token. The priority token may refer to a digital artifact that denotes the communication channel's tier of communication. The subprocess may continue by receiving, via the first wireless headset 104, a data stream on a second communication channel, wherein the second communication channel is associated with a second priority token. The subprocess may continue by connecting, via the first wireless headset 104, to the second communication channel if the second priority token supersedes the first priority token and outputting audio data received through a data stream on the second communication channel. The subprocess may continue by automatically reconnecting the first wireless headset 104 to the first communication channel when the data stream from the second communication channel ends. Accordingly, the first wireless headset 104 is able to seamlessly transition back into a conversation once the high-priority broadcast ends.

While the Figures show different operations for jobsite communications management and steps that may be implemented according to a method and embodiments herein, the order of steps is not intended to be limited to the order as shown in the Figures, nor is the order of the Figures intended to imply sequential implementation of such steps and operations. It should be understood that such steps may be re-arranged, multiplied (e.g., duplicated and/or implemented more than once) as well as removed based on customer needs and/or materials being used, for example. Moreover, the operations performed with the system 100, the wireless headset 104, 114, the powered device 102, and the companion device 118 are not limited to the associated components described above. That is, while an operation may be described as being performed through the first wireless headset 104, it should be understood that the same or similar operations may be performed through the second wireless headset 114, and vice versa. Further, operations can be unrestricted with regards to being performed on one or the other wireless headset 104, 114, and that includes performing such operations as communicating with the companion device 118 and other powered devices 102. As used herein, "configured to [verb]" shall mean that the identified element or assembly has a structure that is shaped, sized, disposed, coupled, and/or configured to perform the identified verb. For example, a member that is "configured to move" is movably coupled to another element and includes elements that cause the member to move, or the member is otherwise configured to move in response to other elements or assemblies. As such, as used herein, "configured to [verb]" recites structure and not function. Further, as used herein, "configured to [verb]" means that the identified element or assembly is intended to, and is designed to, perform the identified verb. Thus, an element that is merely capable of performing the identified verb but which is not intended to, and is not designed to, perform the identified verb is not "configured to [verb]."

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

As used herein, the term "communicably coupled" shall mean that two or more electrical components are connected in such a way that power, information, or both may be exchanged between the coupled components.

While the principles of the disclosure have been made clear in the illustrative embodiments set forth above, it will be apparent to those skilled in the art that various modifications may be made to the structure, arrangement, proportion, elements, materials, and components used in the practice of the disclosure.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," "bottom," "lower," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The term "power tool" used herein to refer to a rotary device powered by an electric power source and utilized for various applications including, but not limited to, home improvement, construction, automotive repair, outdoor and landscaping maintenance, etc. These include, but are not limited to, angle grinders, die grinders drills, impact drivers, drill drivers, hammers, hammer drills, circular saws, reciprocating saws, miter saws, nailers, polishers, cut-out tools, wrenches, ratchets, sanders, lawn mowers, edgers, trimmers, chain saws, and other lawn maintenance and/or landscaping ride-on equipment.

## Claims

1. A method for job site communications management, comprising:
receiving, via a first wireless headset, at least one advertising signal, wherein the first wireless headset comprises a low-energy communication transceiver, a speaker, and a microphone;
determining, via the first wireless headset, if the at least one advertising signal denotes at least one approved worksite powered device comprising at least one of a power tool, a power tool battery pack, a battery charger, or a work light;
initiating, via the first wireless headset, communication with the at least one approved worksite powered device if the at least one advertising signal denotes an approved device;
receiving, via the first wireless headset, audio data from the at least one approved worksite powered device; and
outputting, via the first wireless headset, audio data received from the at least one approved worksite powered device.

2. The method of claim 1, further comprising:
receiving, via the first wireless headset, local audio data; and
transmitting, via the first wireless headset, the local audio data to the at least one approved worksite powered device.

3. The method of claim 1 or 2, further comprising:
transmitting, via the first wireless headset, the at least one advertising signal to a companion device, wherein the at least one advertising signal is generated by at least one polled worksite powered device, and wherein the at least one advertising signal includes a device identifier (ID) token;
comparing, via the companion device, the device ID token to a list of approved worksite powered device;
designating, via the companion device, the at least one polled powered device as the at least one approved worksite powered device based on the comparing;
initiating, via the first wireless headset, communication if the at least one advertising signal denotes an approved device; and
outputting, via the first wireless headset, audio data received from the at least one approved worksite powered device.

4. The method of claim 3, further comprising prompting, via the companion device, to designate the at least one polled powered device as the at least one approved worksite powered device.

5. The method of claim 3, further comprising:
prompting, via the companion device, to select a desired communication channel from a plurality of communication channels;
prompting, via the companion device, to select a broadcasting mode;
receiving, via the first wireless headset, local sensor data; and
broadcasting, via the first wireless headset and according to the broadcasting mode, local sensor data via the desired communication channel.

6. The method of claim 5, wherein the local sensor data includes local audio data.

7. The method of claim 5 or 6, wherein the desired communication channel is a private channel shared by the first wireless headset and a single second wireless headset.

8. The method of claims 5 or 6, wherein the desired communication channel is a group channel shared by the first wireless headset and a plurality of second wireless headsets.

9. The method of claims 5 or 6, wherein the desired communication channel is a companion device channel shared by the first wireless headset and at least one companion device.

10. The method of any of claims 3 to 9, further comprising:
receiving, via the first wireless headset, remote sensor data from the at least one worksite powered device; and
transmitting, via the companion device, the remote sensor data to a system server.

11. The method of any of claims 3 to 10, further comprising determining, via the companion device, at least one of a distance and a physical location of the first wireless device relative to the at least one polled powered device based on a signal strength of the at least one advertising signal, and generating an alert if the physical location does not correspond to a preset value.

12. The method of any of claims 3 to 11, further comprising:
capturing, via the first wireless headset, local sensor data;
determining, via the first wireless headset, if an emergency event has occurred based on the local sensor data; and
broadcasting, via the first wireless headset, a high-priority emergency alert via at least one available communication channel based on the determining.

13. The method of claim 3 or 4, further comprising:
capturing, via the first wireless headset, local sensor data;
prompting, via the companion device, to select a desired communication channel from a plurality of communication channels; and
initiating, via the first wireless headset, communication on the desired communication channel.

14. The method of claim 13, wherein the desired communication channel enables the first wireless headset to:
participate in one-to-one communication via a connected isochronous stream protocol; and/or
receive data streams via a broadcast isochronous stream protocol.

15. A system for job site communications management, comprising:
a plurality of worksite powered devices; and
a first wireless headset including a low-energy communication transceiver, a speaker, and a microphone, wherein the first wireless headset is configured to:
receive at least one advertising signal;
determine if the at least one advertising signal denotes at least one approved worksite powered device from the plurality of worksite powered devices, wherein the at least one approved worksite powered device comprises at least one of a power tool, a power tool battery pack, a battery charger, or a work light;
initiate communication with the at least one approved worksite powered device if the at least one advertising signal denotes an approved device;
receive audio data from the at least one approved worksite powered device; and
outputting audio data received from the at least one approved powered device.
